# EUROPEAN PATENT SPECIFICATION

(11) **EP 4 152 892 B1**
(45) Date of publication and mention of the grant of the patent: **30.04.2025**
(21) Application number: 21198010.7
(22) Date of filing: 21.09.2021
(51) Int. Cl.: H05B 41/36, H05B 47/115

(54) **LIGHTING SYSTEM MANAGEMENT**
BELEUCHTUNGSSYSTEMVERWALTUNG
GESTION DE SYSTÈME D'ÉCLAIRAGE

(43) Date of publication of application: 22.03.2023
(73) Proprietor: Helvar Oy Ab, 02150 Espoo (FI)
(72) Inventor: JUSLÉN, Henri, 02150 Espoo (FI)
(74) Representative: Berggren Oy

(56) References cited:
- US-A1- 2012 323 510
- US-A1- 2016 091 217
- US-A1- 2017 262 945

## Description

### TECHNICAL FIELD

The example and non-limiting embodiments of the present invention relate to managing energy consumption of a lighting system and, in particular, to managing energy consumption of the lighting system in view of requirements of an external entity such as a smart grid applied as the power supply to the lighting system.

### BACKGROUND

An electric power distribution network, typically referred to as an electrical grid or as a power grid, requires constant control in order to balance the electricity production from power generating stations to the electrical grid and the electricity consumption from the electrical grid by consumers. Even though at a high level the balance between electricity production and electricity consumption can be maintained via planning and/or predicting the production and consumption in advance (e.g. on an hourly basis or on a daily basis), e.g. unexpected changes in electricity production and/or electricity consumption may bring the electrical grid out of balance, whereas some means of electricity production (such as ones based on sunlight, wind, waves, etc.) are strongly dependent on environmental conditions and in practical operating conditions the electricity production arising from such energy sources may be different from the planned or predicted one.

A solution addressing fluctuations in the balance between the electricity production to and electricity consumption from the electrical grid involves usage of entities that may increase and/or decrease their electricity consumption according to the needs of the electrical grid in a manner that facilitates ensuring balance between the electricity production and the electricity consumption. An electrical grid involving such a functionality may be referred to as a smart grid, whereas an entity that is coupled to the smart grid and that is able to increase and/or decrease its energy consumption may be referred to as a power balancing reserve.

A lighting system applied for illuminating an indoor or outdoor space may serve as a power balancing reserve for a smart grid via being capable of reducing its power consumption e.g. via application of a power saving mode during time periods when higher-than-expected electricity consumption from the smart grid is expected or encountered without seriously compromising its primary purpose for illuminating the space. However, even though useful in temporarily reducing the power consumption of the lighting system to some extent, such an approach does not make use of full potential of a lighting system to serve as a power balancing reserve for a smart grid.

In related art, US 2017/262945 A1 discloses an equipment management apparatus that manages at least one equipment unit that is supplied with energy and that consumes energy. The equipment management apparatus includes a result value storage unit, an adjustment control implementation status storage unit, and a hypothetical value computation unit. The result value storage unit stores result values of an amount of energy consumed in a first particular day by the at least one equipment unit. The result values are stored in association with time slots of the first particular day. The adjustment control implementation status storage unit stores adjustment control implementation status information indicating whether or not energy adjustment control has been performed in each of the time slots of the first particular day. The hypothetical value computation unit computes a hypothetical value of an amount of energy consumed by the at least one equipment unit as if the energy adjustment control had not been performed.

Further in related art, US 2016/091217 A1 discloses systems and methods for adjusting environmental conditions based on automatically and manually generated requests. A commissioned unit comprising at least one IP luminaire, transmits a signal comprising one or more identification codes. The signal may be, for example, a coded light signal. An environment control device receives the signal, detects user input indicating one or more preferred environmental conditions, and transmits an environment control request comprising the one or more preferred environmental conditions. An environment manager module receives the environment control request, generates an environment control command using the control request, and transmits the environment control command to one or more commissioned units to alter environmental conditions in a space in accordance with the user input.

### SUMMARY

It is an object of the present invention to provide an approach that enhances the capability of a lighting system to serve a secondary purpose as a power balancing reserve for a smart grid without compromising its primary purpose of illumination.

The invention relates to a lighting system controller for controlling operation of a lighting system according to the appended claim 1; to a method for controlling operation of a lighting system according to the appended claim 13; and to a computer program according to the appended claim 14.

According to an embodiment, a lighting system controller is provided, wherein the lighting system controller is applicable for controlling operation of a lighting system that comprises a plurality of luminaires for illuminating respective locations of a space and a plurality of occupancy sensors arranged in said space, wherein respective light output of each of the plurality of luminaires is controlled at least in part in accordance with occupancy indications obtained from an occupancy sensor associated therewith the lighting system controller arranged to: estimate a minimum allowable power consumption of the lighting system and a maximum allowable power consumption of the lighting system for a predefined time period; estimate a baseline power consumption of the lighting system at the predefined time period, wherein the baseline power consumption comprises one of a current power consumption of the lighting system or a predicted power consumption of the lighting system for a future time period; determine respective capacities for reducing or increasing the power consumption of the lighting system at the predefined time period based on the estimated baseline power consumption in dependence of the estimated minimum allowable power consumption and the estimated maximum allowable power consumption; provide information that defines the determined respective capacities for reducing or increasing the power consumption of the lighting system at the predefined time period to a grid controller arranged for facilitating a balance between electricity production to and electricity consumption from an electrical grid that serves to supply operating power to the lighting system; and control, in response to a request from the grid controller to one of reduce or increase the power consumption of the lighting system, one or more luminaires of the plurality of luminaires to one of reduce or increase their respective light outputs in accordance with said request, wherein the lighting system controller is arranged to estimate the minimum allowable power consumption of the lighting system based on respective predefined minimum allowable light intensity levels assigned to said plurality of luminaires and estimate the maximum allowable power consumption of the lighting system based on respective predefined maximum allowable light intensity levels assigned to said plurality of luminaires, wherein the minimum and maximum allowable power consumptions are estimated for the predefined time period in dependence of the occupancy indications obtained for said plurality of luminaires from the respective one of said plurality of occupancy sensors associated with respective one of said plurality of luminaires.

According to another embodiment, a lighting management system is provided, the lighting management system comprising: a lighting system comprising a plurality of luminaires for illuminating respective locations of a space and a plurality of occupancy sensors arranged in said space, wherein respective light output of each of the plurality of luminaires is controlled at least in part in accordance with occupancy indications obtained from an occupancy sensor associated therewith; and a lighting control system according to the embodiment described in the foregoing.

According to another embodiment, a method is provided, wherein the method is applicable for controlling operation of a lighting system that comprises a plurality of luminaires for illuminating respective locations of a space and a plurality of occupancy sensors arranged in said space, wherein respective light output of each of the plurality of luminaires is controlled at least in part in accordance with occupancy indications obtained from an occupancy sensor associated therewith, the method comprising: estimating a minimum allowable power consumption of the lighting system and a maximum allowable power consumption of the lighting system for a predefined time period; estimating a baseline power consumption of the lighting system at the predefined time period, wherein the baseline power consumption comprises one of a current power consumption of the lighting system or a predicted power consumption of the lighting system for a future time period; determining respective capacities for reducing or increasing the power consumption of the lighting system at the predefined time period based on the estimated baseline power consumption in dependence of the estimated minimum allowable power consumption and the estimated maximum allowable power consumption; providing information that defines the determined respective capacities for reducing or increasing the power consumption of the lighting system at the predefined time period to a grid controller arranged for facilitating a balance between electricity production to and electricity consumption from an electrical grid that serves to supply operating power to the lighting system; and controlling, in response to a request from the grid controller to one of reduce or increase the power consumption of the lighting system, one or more luminaires of the plurality of luminaires to one of reduce or increase their respective light outputs in accordance with said request, wherein estimating the minimum and maximum allowable power consumptions comprises estimating the minimum allowable power consumption of the lighting system based on respective predefined minimum allowable light intensity levels assigned to said plurality of luminaires and estimating the maximum allowable power consumption of the lighting system based on respective predefined maximum allowable light intensity levels assigned to said plurality of luminaires, wherein the minimum and maximum allowable power consumptions are estimated for the predefined time period in dependence of the occupancy indications obtained for said plurality of luminaires from the respective one of said plurality of occupancy sensors associated with respective one of said plurality of luminaires.

According to an example, a computer program is provided, the computer program comprising computer readable program code configured to cause performing at least a method according to the embodiment described in the foregoing when said program code is executed on a computing apparatus.

The computer program according to the above-described example may be embodied on a volatile or a non-volatile computer-readable record medium, for example as a computer program product comprising at least one computer readable non-transitory medium having the program code stored thereon, which, when executed by one or more computing apparatuses, causes the computing apparatuses at least to perform the method according to the embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described in the following examples may be used in combinations other than those explicitly described, unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some logical components of a lighting management system according to an example;
Figure 2A illustrates a block diagram of some components of a lighting system according to an example;
Figure 2B illustrates a block diagram of some components of a lighting system according to an example;
Figure 3 illustrates a method according to an example; and
Figure 4 illustrates a block diagram of some components of an apparatus according to an example.

### DESCRIPTION OF SOME EMBODIMENTS

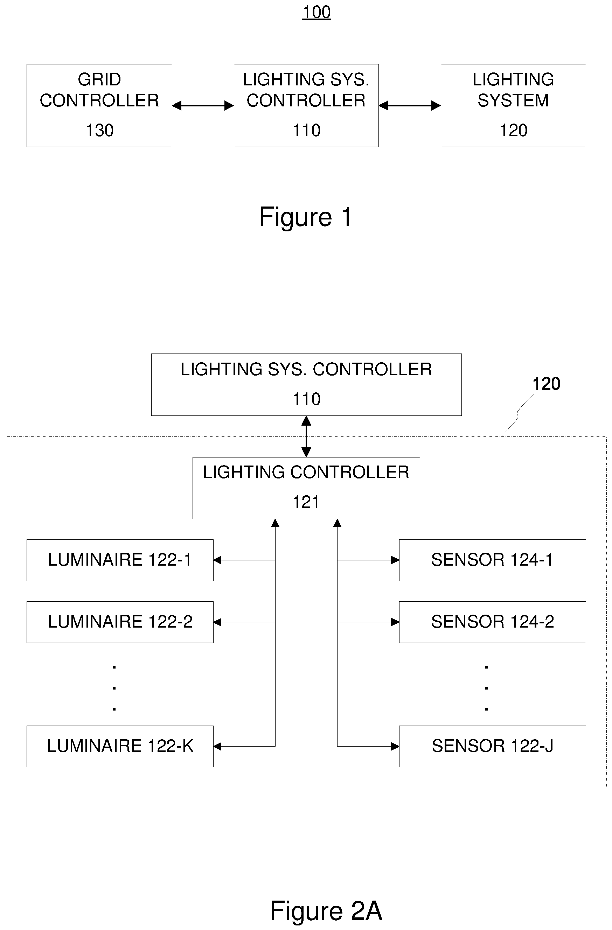

Figure 1 illustrates a block diagram of some components of a lighting management system 100 according to an example. The lighting management system 100 comprises a lighting system controller 110, a lighting system 120 and a grid controller 130. The grid controller 130 may be coupled to or it may be provided as part of an electrical grid that serves as the power supply to the lighting system 120, where the electrical grid may comprise a smart grid that is able, at least to some extent, to adjust a balance between electricity production thereto and electricity consumption therefrom (as discussed in the foregoing). The lighting system controller 110 may be communicatively coupled to the lighting system 120 in order to facilitate controlling at least one aspect of operation of the lighting system 120 and/or as well as to receive information about characteristics of the lighting system 120 and/or about the operational state of the lighting system 120. The lighting system controller 120 may be further communicatively coupled to the grid controller 130 in order to provide information about power consumption of the lighting system 120 and/or to receive requests for one of reducing or increasing (instantaneous) power consumption of the lighting system 120.

The lighting system 120 may be arranged for illuminating a space or area, which may comprise e.g. one or more indoor spaces or areas and/or one or more outdoor spaces or areas. In the following, for brevity of description, the space or area that the lighting system 120 serves to illuminate is referred to as an illuminated space.

Figure 2A illustrates a block diagram of some components of the lighting system 120 according to an example. In this example, the lighting system 120 comprises a lighting controller 121, luminaires 122-1, 122-2, ..., 122-K arranged at respective locations of the illuminated space, and sensor apparatuses 124-1, 124-2, ..., 124-J arranged for observing one or more environmental characteristics at respective locations of the illuminated space. Therein, the luminaires 122-1, 122-2, ..., 122-K may be jointly referred to as a plurality of luminaires 122 while any individual luminaire of the plurality of luminaires 122 may be referred to via a reference number 122-k, whereas the sensor units 124-1, 124-2, ..., 124-J may be jointly referred to as a plurality of sensor units 124 while any individual sensor unit of the plurality of sensor units 124 may be referred to via a reference number 124-j.

The plurality of luminaires 122 and the plurality of sensor units 124 are communicatively coupled to the lighting controller 121 and they may be further communicatively coupled to each other. Hence, the communicative coupling enables transfer of data and control information at least between the luminaire 122-k and the lighting controller 121 and between the sensor unit 124-j and the lighting controller 121. The lighting controller 121 is communicatively coupled to the lighting system controller 110 e.g. to enable transfer of data and control information between the two. The communicative couplings within the lighting system 120 and between the lighting system 120 and the lighting system controller 110 may be provided via a wireless communication network, via a wired communication network or bus, or via a combination of a wireless communication network and a wired communication network or bus.

In the example of Figure 2A, any sensor unit 124-j may be a stand-alone one that is provided as entity that is separate from the luminaires 122-k or it may be integrated to or otherwise co-located with one of the plurality of luminaires 122. In case a certain sensor unit 124-j is integrated to a certain luminaire 122-k, the communicative coupling between the certain sensor unit 124-j and the lighting controller 121 may be provided via the certain luminaire 122-k (or a component thereof). In this regard, any sensor unit 124-j of the plurality of sensor units 124 may comprise respective one or more sensors, whereas the sensor data provided from the sensor unit 124-j to the lighting controller 121 may comprise respective sensor data captured via operation of the one or more sensors therein.

In the example of Figure 2A, the lighting controller 121 may be responsible for controlling respective light output of the plurality of luminaires 122, possibly at least partially on basis of sensor data received from the plurality of sensor units 124, the lighting controller 121 thereby providing at least partially centralized control over the lighting provided in the illuminated space via operation of the lighting system 120. In order to enable sensor-data-based lighting control, the lighting controller may have a mapping between the sensor units 124-j and the luminaires 122-k, which mapping may associate each sensor unit 124-j of the plurality of sensor units 124 with respective one or more luminaires 122-k of the plurality of luminaires 122 and/or to associate each of the plurality of luminaires 122 to respective one or more sensor units 124-j of the plurality of sensor units 124. As an example in this regard, the mapping between the sensor units 124-j and the luminaires 122-k may be based on e.g. knowledge of respective locations of the plurality of sensor units 124 in relation to the plurality of luminaires 122. The lighting controller 121 may further have knowledge of respective locations of the plurality of luminaires 122 and the plurality of sensor units 124.

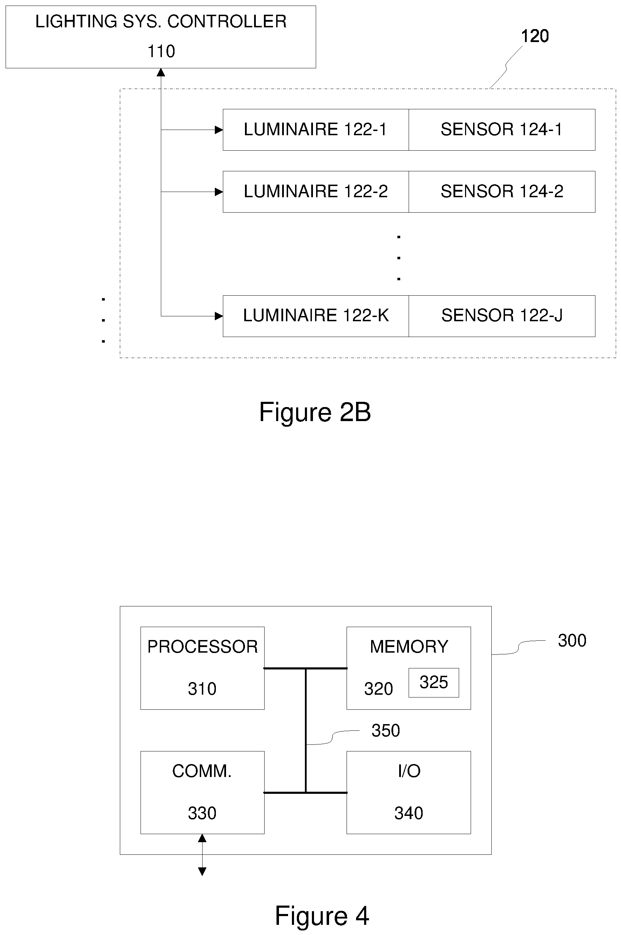

Figure 2B illustrates a block diagram of some components of the lighting system 120 according to another example. Like in the example of Figure 2A, the lighting system 120 comprises the plurality of luminaires 122 and the plurality of sensor units 124. In this example, each of the plurality of sensor units 124 is integrated to one of the plurality of luminaires 122, thereby implicitly associating a sensor unit 124-j with a luminaire 122-k to which it is integrated. The sensor portion 124-j integrated to (and associated with) the luminaire 122-k is arranged to provide a lighting control portion in the luminaire 122-k with local sensor data (e.g. from an occupancy sensor and/or a light sensor included therein), thereby enabling autonomous lighting control at the luminaire 122-k at least partially on basis of local sensor data obtained at the luminaire 122-k without the need for centralized lighting control. In this example, the plurality of luminaires 122 (e.g. respective lighting control portions thereof) may be communicatively coupled to each other and to the lighting system controller 121 via a wireless communication network, via a wired communication network or bus, or via a combination of a wireless communication network and a wired communication network or bus.

The luminaires 122-k of the example of Figure 2B may comprise self-learning luminaires that are capable of autonomously adapting their operation and/or configuring some aspects of their operation according to their operating environment e.g. in order to account for typical occupancy patterns occurring in the illuminated space, for ambient light conditions in the illuminated space and/or to characteristics and operation of other luminaires in their vicinity.

Each of the sensor units 124-j may comprise respective one more sensors for observing respective environmental characteristics at the respective location of the illuminated space. As an example, the sensor unit 124-j may comprise at least one of the following sensors:
- an occupancy sensor for monitoring occupancy at the respective location of the illuminated space, e.g. a passive infrared (PIR) sensor, a microware radar, a lidar, a camera, etc.;
- a light sensor for measuring ambient light level at the respective location of the illuminated space.

In other words, the lighting system 120 may comprise a plurality of occupancy sensors and/or a plurality of light sensors. In this regard, the occupancy sensor and the light sensor of a sensor unit 124-j that is associated with a luminaire 122-k may be referred to as respective sensors associated with the luminaire 122-k. Moreover, the sensor data originating from an occupancy senor or from a light sensor of a sensor unit 124-j that is associated with a luminaire 122-k may be referred to as respective sensor data associated with the luminaire 122-k.

The respective examples of Figure 2A and 2B serve as non-limiting examples of characteristics of the lighting system 120. In one example, the lighting system 120 may comprise a lighting system according to the example of Figure 2A, whereas in another example the lighting system 120 may comprise a lighting system according to the example of Figure 2B. In a further example, the lighting system 120 may comprise one or more lighting system portions according to the example of Figure 2A and/or one or more lighting system portions according to the example of Figure 2B.

In the respective examples of Figures 2A and 2B the lighting control is at least partially provided via operation of the lighting controller 121 or via operation of the respective lighting control portions of the luminaires 122-k. In the following, the term lighting control entity is applied to refer to the lighting controller 121, to the lighting control portion of the luminaire 122-k, or to another entity that may be applied for controlling respective light output of one or more of the plurality of luminaires 122. The lighting control via operation of the lighting control entity may be carried out in accordance with a predefined lighting control logic that defines one or more lighting control rules. Each lighting control rule may define a respective pair of a triggering condition and a lighting control action to be carried out in response to an occurrence of the triggering condition. A lighting control rule may optionally have one or more lighting control parameters associated therewith. As an example, a lighting control rule may define a triggering condition that directly or indirectly pertains to sensor data obtained from a sensor unit 124-j that is associated with the luminaire 122-k.

In the course of its operation, the lighting control entity may capture or derive a respective time series of occupancy indications (i.e. respective indications of one of occupancy or non-occupancy) based on the occupancy sensor data received from the occupancy sensor of the sensor unit 124-j and/or derive a respective time series of light level indications based on the light sensor data received from the light sensor of the sensor unit 124-j. Hence, the (time series of) occupancy indications derived based on sensor data originating from an occupancy sensor of a sensor unit 124-j associated with a luminaire 122-k may be considered as (a time series of) occupancy indications associated with the luminaire 122-k, whereas the (time series of) light level indications derived based on sensor data originating from a light sensor of a sensor unit 124-j associated with a luminaire 122-k may be considered as (a time series of) light level indications associated with the luminaire 122-k.

In the following, lighting control actions arising from application of the lighting control logic are predominantly described as operations carried out by the lighting control entity (without an explicit reference to the lighting control logic or the lighting control rules defined therein). As a few examples of lighting control actions arising from operation of the lighting control logic, the lighting control logic may define one or more of the following lighting control rules based on the time series of occupancy indications associated with the luminaire 122-k and/or based on the time series of light level indications associated with the luminaire 122-k:
- a lighting control rule that defines switching on the light output of the luminaire 122-k at a target light intensity *I_{tgt,k}* or otherwise adjusting the light output of the luminaire 122-k from a lower light intensity to the target light intensity *I_{tgt,k}* (e.g. switching on the light output of the luminaire 120-k) as a response to the time series of occupancy indications indicating a change of the occupancy state from non-occupancy to occupancy;
- a lighting control rule that defines adjusting the light output of the luminaire 122-k to a stand-by light intensity *I_{off,k}* (e.g. switching off the light output of the luminaire 120-k) in accordance with a predefined dimming curve as a response to the time series of occupancy indications indicating a change of occupancy state from occupancy to non-occupancy followed by a switch-off delay period *T_{off,k}* without indicating a change of the occupancy state from non-occupancy to occupancy;
- a lighting control rule that defines increasing the light intensity applied for the light output of the luminaire 122-k as a response to the time series of light level indications indicating light level that is below a target light level *L_{tgt,k}* by more than a predefined margin *M_{tgt,k}*;
- a lighting control rule that defines decreasing the light intensity applied for the light output of the luminaire 122-k as a response to the time series of light level indications indicating light level that is above the target light level *L_{tgt,k}* by more than the predefined margin *M_{tgt,k}.*

In this regard, a light intensity level applied for the light output of a luminaire 122-k (e.g. the respective target light intensity *I_{tgt,k},* the respective stand-by light intensity *I_{off,k}* or another light intensity) may be defined or expressed as a respective percentage of the maximum light intensity of the luminaire 122-k (i.e. the light intensity of the luminaire 122-k at the maximum output power of the luminaire 122-k). In the exemplifying lighting control rules described above, the dimming curve may define one or more intermediate light intensities between the target light intensity *I_{tgt,k},* and the stand-by light intensity *I_{off,k}* and their respective timings with respect to the duration of the switch-off delay period *T_{off,k}* in order to gradually dim down the light output of the luminaire 122-k. The stand-by light intensity *I_{off,k}* may be zero (i.e. the light output of the luminaire 122-k completely switched off) or it may be a relatively small non-zero value selected, for example, from a range from a few percent to 20 percent of the maximum light intensity of the luminaire 122-k. Moreover, to account for cases where the occupancy state remains unchanged, the lighting control logic may comprise respective lighting control rules for keeping the light output of the luminaire 122-k on in response to continued occupancy and/or for keeping the light output of the luminaire 122-k off in response to continued non-occupancy.

In the centralized control according to the example of Figure 2A the lighting controller 121 has access to the sensor data captured at and received from the plurality of sensor units 124-j while the lighting controller 121 further has implicit knowledge of respective operational states of the plurality of luminaires 122 (e.g. with the respect to their light output) and implicit knowledge of lighting control rules and/or lighting control parameters applicable therefor. In case of autonomously controlled luminaires 122-k of the example of Figure 2B, the knowledge of the respective operational states of the luminaire 122-k, the knowledge of lighting control rules and/or lighting control parameters applicable therefor and/or the sensor data captured at the sensor unit 124-j associated with the luminaire 122-k is available at the lighting control portion of the respective luminaire 122-k. At least part of this information may be shared with other ones of the plurality of luminaires 122 and with the lighting system controller 110 via the luminaire 122-k (e.g. the lighting control portion therein) transmitting (e.g. broadcasting) status indication messages to the other nodes of the lighting system 120 and to the lighting system controller 110. A status indication message may comprise one or more status indications that are descriptive of current (or recent) operating characteristic of the luminaire 122-k. Conversely, the luminaire 122-k may receive status indication messages (and hence status indications) from other ones of the plurality of luminaires 122. A status indication transmitted from the luminaire 122-k may comprise, for example, one of the following:
- an action indication that identifies a lighting control action taken by the luminaire 122-k, e.g. switching on the light output of the luminaire 122-k (e.g. at the target light intensity *I_{tgt,k}*)*,* switching off the light output of the luminaire 120-k (e.g. to the stand-by light intensity *I_{off,k}*)*,* or keeping the light output of the luminaire 120-k unchanged (e.g. at the target light intensity *I_{tgt,k}* or at the stand-by light intensity *I_{off,k});*
- a light intensity indication that indicates adjusting or setting the light output of the luminaire 122-k to a light intensity indicated in the light intensity indication (e.g. due to operation of a lighting control rule for one of increasing or decreasing the light intensity of the light output in accordance with the light level indications associated with the luminaire 122-k);
- a sensor indication that comprises the current (or the most recent) sensor indication captured or derived at the sensor unit 124-j, e.g. the current (or the most recent) occupancy indication derived at the sensor unit 124-j or the current (or the most recent) light level indication captured or derived at the sensor unit 124-j.

A status indication message may comprise timing information that indicates the capturing time(s) of the status indication(s) included in the status indication message, e.g. one or more timestamps that indicate the time with respect to a predefined reference time. A status indication message may further comprise the device **ID** assigned to the luminaire 122-k or to the sensor unit 124-j that has transmitted the status indication message, in other words an identification of the luminaire 122-k or an identification of the sensor unit 124-j to which the status indication(s) conveyed in the status indication message pertain.

At least some of the plurality of luminaires 122 may be assigned to a luminaire group that includes one or more other ones of the plurality of luminaires 122, whereas the lighting system 120 may involve one or more luminaire groups. In this regard, some of the luminaires 122-k may be assigned to one of the one or more luminaire groups while some of the luminaires 122-k may not be assigned to any of the one or more luminaire groups. The luminaire grouping may be applied in lighting control e.g. such that in case one of the luminaires 122-k assigned to a certain luminaire group is switched (or kept) on e.g. via operation of one of the exemplifying lighting control rules described above, the other luminaires 120-k of the certain luminaire group are also switched (or kept) on regardless of the occupancy state associated therewith.

In the lighting system 120 according to the example of Figure 2A, information that defines the luminaire grouping may be stored in the lighting controller 121, whereas the lighting controller 121 may apply the grouping information via accessing the grouping information upon controlling the certain luminaire 122-k to switch on its light output and also control other luminaires 122-k assigned to the same luminaire group to switch one their respective light outputs. In the lighting system 120 according to the example of Figure 2B, the information that defines the luminaire grouping may be stored in the luminaires 122-k involved, e.g. the certain luminaire 122-k has a knowledge of other luminaires assigned to the same luminaire group with the certain luminaire, whereas the lighting control portion in the certain luminaire 122-k may apply the grouping information via switching on its light output as a response to receiving an action indication that indicates another luminaire of the same luminaire group having switched on its light output.

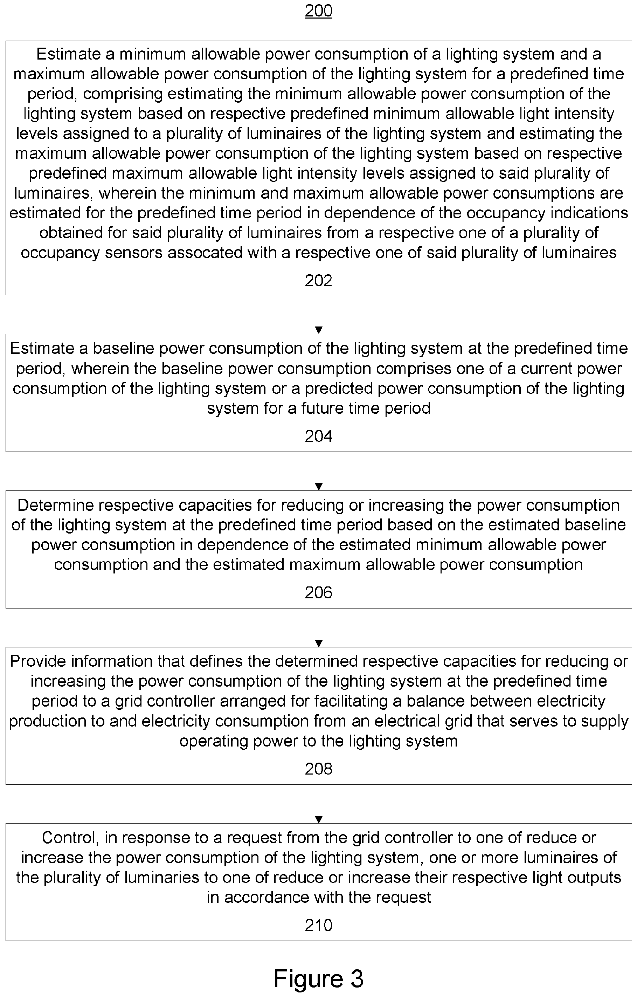

An aspect of operation of the lighting system controller 110 may involve estimation of the current capacity to reduce the power consumption of the lighting system 120 and/or estimation of the current capacity to increase the power consumption of the lighting system 120 in view of the current operational state of the lighting system 120. As an example in this regard, the lighting system controller 110 may carry out a method 200 illustrated in Figure 3, where the method 200 may comprise the following steps:
- estimating a minimum allowable power consumption of the lighting system 120 and a maximum allowable power consumption of the lighting system 120 for a predefined time period in dependence of occupancy indications obtained for the plurality of luminaires 122 (block 202);
- estimating a baseline power consumption of the lighting system 120 (block 204) at the predefined time period;
- determining respective capacities for reducing and/or increasing the power consumption of the lighting system 120 at the predefined time period based on the estimated baseline power consumption in dependence of the minimum allowable power consumption and the maximum allowable power consumption (block 206); and
- providing information that defines the determined respective capacities for reducing or increasing the power consumption of the lighting system 120 at the predefined time period to the grid controller 130 (block 208).

Consequently, the grid controller 130 may request the lighting system controller 110 to cause the lighting system 120 one of increase or reduce its power consumption in view of the capacity of the lighting system 120 to adjust its power consumption in an attempt to facilitate maintaining balance between electricity production to and electricity consumption from the electrical grid, and hence the method 200 may optionally further comprise controlling, in response to a request from the grid controller 130 to one of reduce or increase power consumption of the lighting system 120, one or more luminaires 122-k of the plurality of luminaires 122 to one of reduce or increase their respective light outputs in accordance with the request, as indicated in block 210. The respective operations described with references to blocks 202 to 210 of Figure 3 may be varied or complemented in a number of ways, for example as described in the foregoing and/or in the following with references to operation of the lighting system controller 110 and/or to operation of other elements of the lighting management system 100.

The predefined time period may comprise a current time or a time period that includes the current time and, consequently, in such examples the determined baseline power consumption of the lighting system 120 (cf. block 204) may be also referred to as a current power consumption of the lighting system 120 or as an instantaneous power consumption of the lighting system 120. In the examples described in the following, respective estimations of the baseline power consumption, minimum allowable power consumption and maximum allowable power consumption that pertain to the current time are assumed (unless explicitly indicated otherwise).

In view of the above-described operation of the lighting system 120, the lighting system controller 110 may obtain information regarding various aspects that pertain to characteristics and operational states of the plurality of luminaires 122. As an example in this regard, the lighting system controller 110 may obtain respective light intensity levels applied for the light output of the plurality of luminaires 122 and the respective sensor data originating from the plurality of sensor units 124, where the light intensity level for a luminaire 122-k may be defined as respective percentage of the maximum light intensity of the respective luminaire 122-k. The lighting system controller 110 may receive these pieces of information, for example, via the lighting controller 121 providing the lighting system controller 110 with these pieces of information (cf. the example of Figure 2A) or via the lighting system controller 110 receiving status indications originating from the plurality of luminaires 122 (cf. the example of Figure 2B).

As another example, the lighting system controller 110 may obtain information that defines and/or enables deriving respective maximum power consumption of the plurality of luminaires 122 (i.e. the power consumption at the maximum light intensity level of the respective luminaire 122-k). As in the case of light intensity level information, the lighting system controller may receive this information e.g. via the lighting controller 121 or directly from the plurality of luminaires 122. As an example, the received information in this regard for a certain luminaire 122-k may comprise a (direct) indication of the maximum power consumption of the respective luminaire 122-k (e.g. as kilowatts), whereas in another example it may comprise the device ID of the respective luminaire 122-k. In the latter example, the lighting system controller 110 may use the device ID to request (e.g. directly or via the lighting controller 121) the respective luminaire 122-k to report its maximum power consumption or it may use the device ID to find the maximum power consumption of the respective luminaire 122-k via consulting a database that defines a mapping between luminaire IDs and corresponding maximum power consumptions.

The lighting system controller 110 may further have a knowledge of respective minimum and/or maximum allowable light intensity levels assigned to one or more of the plurality of luminaires 122, where the respective minimum and/or maximum allowable light intensity levels of a certain luminaire 122-k may be defined e.g. as respective percentages of the maximum light intensity level of the respective luminaire 122-k. In this regard, the respective maximum and/or minimum allowable light intensity levels assigned to the respective luminaire 122-k may correspond to predefined requirements of a minimum and/or maximum allowable illumination at the location of the respective luminaire 122-k in the illuminated space when one or more persons are present at the respective location. This allows for ensuring that the light level in a given location of the illuminated space does not fall below a predefined minimum illumination and/or for ensuring that the light level (apart from possible ambient light) in the given location of the illuminated space does not exceed a predefined maximum illumination when one or more persons are present in the given location. According to an example, the minimum and/or maximum allowable light intensity levels defined for a certain luminaire 122-k may be applicable regardless of the time period under consideration, whereas in another example the respective minimum and/or maximum allowable light intensity levels for the certain luminaire 122-k may be applicable for one or more predefined time periods (while being non-applicable for other time periods). As an example in this regard, the minimum allowable light intensity level and/or the maximum allowable light intensity for a given luminaire may be applicable according to one or more of the following examples:
- at predefined times of the day (e.g. during office hours, during daytime, during nighttime, etc.),
- on predefined days of the week (e.g. on weekdays or on weekends),
- in predefined months of the year.

With the above-described pieces of information, the lighting system controller 110 may estimate the minimum allowable power consumption of the lighting system 120, the maximum allowable power consumption of the lighting system 120 and the baseline power consumption of the lighting system 120 via respective minimum allowable energy consumptions, maximum allowable energy consumptions and the current energy consumptions of the plurality of luminaires 122.

The lighting system controller 110 may further have a knowledge of the luminaire groups applied in the lighting system 120. The luminaire grouping information may be provided as pre-stored information in the lighting system controller 110 or the lighting system controller may obtain the luminaire grouping information, for example, from the lighting controller 121 or from the luminaires 122-k. In the latter example, the lighting system controller 110 may have the knowledge of the respective device IDs of the luminaires 122-k (via reception of the status messages therefrom) and it may request a luminaire having a certain device ID to report back device IDs of the other luminaires assigned to the same luminaire group with the one having the certain device ID, thereby enabling the lighting system controller 110 to obtain knowledge of the luminaire groups applied within the lighting system 120.

The lighting system controller 110 may estimate the baseline power consumption of a certain luminaire 122-k based on the most recently indicated light intensity level of the respective luminaire 122-k (in view of the time period under consideration) in dependence of the maximum power consumption of the respective luminaire 122-k, e.g. as a product of these two pieces of information.

The lighting system controller 110 may estimate the respective minimum allowable power consumption for each of the plurality of luminaires 122 in consideration of occupancy state associated with the respective luminaire 122-k. Hence, the respective minimum allowable power consumption for those luminaires 122-k for which occupancy is indicated may be estimated in accordance with examples described in the following, whereas the respective minimum allowable power consumption for those luminaires 122-k for which non-occupancy is indicated may be assumed to be zero or a small non-zero value that corresponds to a small non-zero light intensity level of the respective luminaire 122-k (e.g. in a range of a few percent of the maximum light intensity level of the respective luminaire 122-k).

The lighting system controller 110 may estimate the minimum allowable power consumption for a certain luminaire 122-k based on the minimum allowable light intensity level defined for the respective luminaire 122-k and the maximum power consumption of the respective luminaire 122-k. In an example, the minimum allowable power consumption may be estimated as a product of these two pieces of information, whereas in other examples the minimum allowable power consumption may be estimated via a look-up table or via a predefined conversion function that defines the minimum allowable power consumption for the respective luminaire 122-k in dependence of the minimum allowable light intensity level defined therefor. In case the minimum allowable light intensity level for the respective luminaire 122-k is applicable for one or more predefined time periods (and non-applicable for other time periods), applicability of the minimum allowable power consumption may be determined in consideration of the time period under consideration (e.g. the current time). In case no minimum allowable light intensity level is defined for the respective luminaire 122-k or the in case the minimum allowable light intensity level is not applicable in view of the time period under consideration, the minimum allowable power consumption for the respective luminaire 122-k may be assumed zero.

In another example, estimation of the minimum allowable power consumption for a certain luminaire 122-k may further consider the light level indications associated with the respective luminaire 122-k, e.g. via setting the minimum allowable power consumption of the respective luminaire 122-k to zero in case most recent light level indication (in view of the time period under consideration) associated with the respective luminaire 122-k indicates a light level that exceeds a predefined light level threshold (which is considered to provide sufficient illumination) when the light output of the respective luminaire is turned off.

In a further example, the respective minimum allowable power consumption for one or more luminaires 122-k may be set or estimated in view of luminaire grouping in dependence of most recent occupancy indications (in view of the time period under consideration) associated with the luminaires 122-k of the luminaire group. Herein, the most recent occupancy indications may be ones that pertain to a time period of predefined duration (chosen e.g. from a range from one minute to ten minutes, e.g. five minutes) preceding the time period under consideration. As an example in this regard, the lighting system controller 110 may determine, for each luminaire group, respective triggering luminaires and triggered luminaires, where the respective triggering luminaires are those for which at least one of the most recent occupancy indications indicates occupancy and where the respective triggered luminaires are those for which none of the most recent occupancy indications indicates occupancy. Moreover, the lighting system controller 110 may consider respective luminaires 120-k of each luminaire group in the following manner:
- The respective minimum allowable power consumption of those luminaires 122-k that are designated as triggering luminaires may be set to the baseline power consumption of the respective luminaire 122-k.
- The respective minimum allowable power consumption of those luminaires 122-k that are designated as triggered luminaires may be set to zero.
- In alternative approach to the one described in the previous bullet point, the respective minimum allowable power consumption of a predefined number (e.g. one or two) of those luminaires 122-k that are designated as triggered luminaires that are closest to a triggering luminaire of the same luminaire group may be set to a predefined intermediate power consumption value, e.g. to a value that corresponds to approximately 50 % of the currently applied light intensity level of the respective luminaire 122-k, whereas the respective minimum allowable power consumption of the remaining triggered luminaires 122-k of the same luminaire group may be set to zero.

In other words, respective power consumption of those luminaires 122-k of a luminaire group that are associated with the sensor unit 124-j having indicated occupancy in a recent past (in view of the time period under consideration) may be assumed to remain unchanged (via keeping their light output unchanged), whereas respective power consumption of those luminaires 122-k of the luminaire group that are associated with the sensor unit 124-j not having indicated occupancy in the recent past may be assumed to be decreased or substantially zero (via adjusting their light output to a lower light intensity value).

The above-described examples concerning estimation of the minimum allowable power consumption of the luminaire 122-k refer to setting the minimum allowable power consumption to zero. In respective variations of these examples, a value determined based on the stand-by light intensity *I_{off,k}* of the respective luminaire 122-k (e.g. as a product of the stand-by light intensity *I_{off,k}* and the maximum power consumption of the respective luminaire 122-k) may be applied instead of zero.

According to an example, the lighting system controller 110 may estimate the respective maximum allowable power consumption for each of the plurality of luminaires 122 regardless of the occupancy state associated with the respective luminaire 122-k. In this regard, the lighting system controller 110 may estimate the maximum allowable power consumption for a certain luminaire 122-k based on the maximum allowable light intensity level defined for the respective luminaire 122-k and the maximum power consumption of the respective luminaire 122-k. In case the maximum allowable light intensity level for the respective luminaire 122-k is applicable for one or more predefined time periods (and non-applicable for other time periods), applicability of the maximum allowable power consumption may be determined in consideration of the time period under consideration (e.g. the current time): in case no maximum allowable light intensity level is defined for the respective luminaire 122-k or in case the maximum allowable light intensity level is not applicable in view of the time period under consideration, the maximum power consumption of the respective luminaire 122-k may be applied as its maximum allowable power consumption. In contrast, in case the maximum allowable light intensity level is defined for the respective luminaire 122-k and it is applicable in view of the time period under consideration, the lighting system controller 110 may estimate the maximum allowable power consumption of the respective luminaire 122-k e.g. as a product of the maximum allowable light intensity level and the maximum power consumption of the respective luminaire 122-k.

In another example, the lighting system controller 110 may estimate the respective maximum allowable power consumption for each of the plurality of luminaires 122 in consideration of occupancy state associated with the respective luminaire 122-k. As an example in this regard, the respective maximum allowable power consumption for those luminaires 122-k for which occupancy is indicated may be estimated in accordance with examples described in the foregoing, whereas the respective maximum allowable power consumption for those luminaires 122-k for which non-occupancy is indicated may be assumed to be the maximum power consumption defined for the respective luminaire 122-k. In another example pertaining to occupancy-state-dependent estimation of the maximum allowable power consumption, the respective maximum allowable power consumption for a certain luminaire 122-k may be estimated in accordance with examples described in the foregoing via applying a first maximum allowable light intensity level in case occupancy is indicated for the respective luminaire 122-k and via applying a second maximum allowable light intensity level in case non-occupancy is indicated for the respective luminaire 122-k, where the first and second maximum allowable light intensity levels are different from each other. Herein, the second maximum allowable light intensity level may be applied e.g. to limit the amount of light output of the respective luminaire 122-k that may enter adjacent locations (e.g. through a window) also when no persons are present at the location of the respective luminaire 122-k.

The lighting system controller 110 may determine, for each of the plurality of luminaires 122, respective capacities for reducing or increasing their power consumption based on the minimum allowable power consumption, the maximum allowable power consumption and the baseline power consumption estimated for the respective luminaire 122-k:
- The capacity for reducing the power consumption of the luminaire 122-k may be determined based on a difference between the baseline power consumption of the luminaire 122-k and the minimum allowable power consumption estimated for the luminaire 122-k. In an example, the determined difference as such may be applied as the capacity for reducing the power consumption of the luminaire 122-k, whereas in another example the capacity for reducing the power consumption of the luminaire 122-k may be determined as a predefined first percentage of the determined difference to allow for a safety margin (where the first percentage may be chosen e.g. from a range from 90 to 100 %).
- The capacity for increasing the power consumption of the luminaire 122-k may be determined based on a difference between the maximum allowable consumption and the baseline power consumption estimated for the luminaire 122-k. In an example, the determined difference as such may be applied as the capacity for increasing the power consumption of the luminaire 122-k, whereas in another example the capacity for increasing the power consumption of the luminaire 122-k may be determined as a predefined second percentage of the determined difference to allow for a safety margin (where the second percentage may be chosen e.g. from a range from 90 to 100 %).

Consequently, according to an example, the lighting system controller 110 may determine the capacity for reducing power consumption of the lighting system 120 as a combination (e.g. as a sum) of the respective capacities for reducing power consumption determined for the plurality of luminaires 122 and it may determine the capacity for increasing power consumption of the lighting system 120 as a combination (e.g. as a sum) of the respective capacities for increasing power consumption determined for the plurality of luminaires 122.

In the course of its operation, the lighting system controller 110 may store respective values of the minimum allowable power consumption of the lighting system 120, the maximum allowable power consumption of the lighting system 120 and the baseline lighting consumption of the lighting system estimated e.g. according to one of the examples described in the foregoing. Over time, the information so obtained constitutes history data including e.g. the following pieces of information:
- a history of minimum allowable power consumptions estimated for the lighting system 120,
- a history of maximum allowable power consumptions estimated for the lighting system 120,
- a history of baseline power consumption estimated for the lighting system 120.

In this regard, each item of the history data may be provided with respective timing information (e.g. with one or more respective timestamps) that indicates the time of their determination or the history data may be arranged into a data structure that implicitly defines the respective timing of items of the history data. Herein, the timing information may indicate timing of an item of the history data with respect to a predefined reference time instant, the timing information may indicate timing of an item of the history data with respect to respective timings of other items of the history data and/or the timing information may indicate one or more of the following: time of the day, day of the week, day of the month, month of the year.

Once a sufficient amount of history data is available, the lighting system controller 110 may apply the history data to estimate a predicted minimum allowable power consumption of the lighting system 120, a predicted maximum allowable power consumption of the lighting system 120 and a predicted baseline power consumption of the lighting system 120 for a future time period or a future time instant. In other words, the estimated minimum allowable power consumption (cf. block 202), the estimated maximum allowable power consumption (cf. block 202) and the estimated baseline power consumption (cf. block 204) may each pertain to the future time period or future time instant (instead of the current time). Consequently, the lighting system controller 110 may determine respective predicted capacities for reducing or increasing the power consumption of the lighting system 120 for the future time period based on the predicted minimum allowable power consumption, the predicted maximum allowable power consumption and the predicted baseline power consumption determined for the future time period (cf. block 206).

In this regard, determination of the predicted minimum allowable power consumption of the lighting system 120, the predicted maximum allowable power consumption of the lighting system 120 and the predicted baseline power consumption of the lighting system 120 may be carried out via usage of a predefined prediction model. The prediction model may comprise, for example, a linear prediction model or an artificial neural network (ANN) trained for the purpose using the history data or corresponding data collected earlier (e.g. in the course of operation of the lighting system 120 and the lighting system controller 110) as the training data. A linear prediction model may be derived e.g. via (multiple) linear regression, whereas an ANN may be trained via supervised learning. Hence, using the prediction model for predicting the minimum allowable power consumption, the prediction model takes a plurality of past values of the minimum allowable power consumption as input and provides a (single value of) predicted minimum allowable power consumption as an output, while the respective prediction models for deriving the predicted maximum allowable power consumption and for deriving the predicted baseline power consumption may operate in a similar manner, *mutatis mutandis.*

In an example, determination of one or more of the predicted minimum allowable power consumption, the predicted maximum allowable power consumption and the predicted baseline power consumption may, additionally or alternatively, consider a history of occupancy indications captured in the lighting system 120 and/or a history of light level indications captured in the lighting system 120, the underlying prediction thereby accounting for variations in the occupancy status in the illuminated space and/or the (ambient) lighting conditions in the illuminated space, respectively.

The above example regarding determination of the respective capacities for reducing or increasing the power consumption of the lighting system 120 involve derivation of the predicted minimum allowable power consumption, the predicted maximum allowable power consumption and the predicted baseline power consumption. While in some examples both the minimum allowable power consumption of the lighting system 120 and the maximum allowable power consumption of the lighting system 120 may vary over time, in other examples one or both of the minimum allowable power consumption and the maximum allowable power consumption may remain substantially unchanged over time and the above example that involves prediction may be varied accordingly:
- in case the minimum allowable power consumption of the lighting system 120 remains substantially unchanged over time, the predicted minimum allowable power consumption of the lighting system 120 may not be determined and determination of the capacity to decrease the power consumption of the lighting system 120 may consider a past value of the minimum allowable power consumption of the lighting system instead;
- in case the maximum allowable power consumption of the lighting system 120 remains substantially unchanged over time, the predicted maximum allowable power consumption of the lighting system 120 may not be determined and determination of the capacity to increase the power consumption of the lighting system 120 may consider a past value of the maximum allowable power consumption of the lighting system instead.

According to an example, the lighting system controller 110 may receive, from the grid controller 130, a request for one of reducing or increasing the power consumption of the lighting system 120, whereas the lighting system controller 110 may respond to the request via controlling one or more of the plurality of luminaires 122 to one of reduce or increase their respective light outputs, so as to one of reduce or increase the power consumption of the lighting system 120 accordingly. The request may define one of reduced or increased power consumption to be applied for a predefined time period or until further notice, e.g. until receiving, from the grid controller 130, a request to resume normal operation of the lighting system 120.

In an example, as a response to a request to reduce the power consumption of the lighting system 120, the lighting system controller 110 may control each of the plurality of luminaires 122 to temporarily decrease the light intensity level applied therein to the respective minimum allowable light intensity level (when the light output thereof is switched on). This may be accomplished, for example, via temporarily setting the respective target light intensities *I_{tgt,k}* of the plurality of luminaires to the respective minimum allowable light intensity levels, thereby resulting in reduced power consumption due to reduced light intensity level when the luminaire 122-k is switched on or kept on e.g. due to operation of the respective lighting control rule(s). Along similar lines, in response to a request to increase the power consumption of the lighting system 120, the lighting system controller 110 may control each of the plurality of luminaires 122 to temporarily increase the light intensity level applied therein to the respective maximum allowable light intensity level (when the light output thereof is switched on), which may be accomplished e.g. via setting the respective target light intensities *I_{tgt,k}* of the plurality of luminaires to the respective maximum light intensity levels, thereby resulting in increased power consumption due to increased light intensity level when the luminaire 122-k is switched on or kept on e.g. due to operation of the respective lighting control rule(s).

The lighting system controller 110 controlling the plurality of luminaires 122 to apply the respective minimum allowable light intensity level or to apply the respective maximum allowable light intensity level may comprise the lighting system controller 110 instructing the lighting controller 121 to adjust the respective light intensity levels of the plurality of luminaires 122 accordingly or the lighting system controller 110 transmitting (e.g. broadcasting) a message to the plurality of luminaires 122 instructing the luminaires 122-k to adjust their light intensity settings accordingly. Conversely, upon returning to the normal mode of operation of the lighting system 120, the lighting system controller 110 may instruct the lighting controller 121 to revert back to respective normal light intensity levels of the plurality of luminaires 122 or the lighting system controller 110 transmitting (e.g. broadcasting) a message to the plurality of luminaires 122 instructing the luminaires 122-k to resume their respective normal light intensity settings. This may be accomplished, for example, via setting the respective target light intensities *I_{tgt,k}* of the plurality of luminaires back to their normal or default values.

In a variation of the above examples, as a response to a request to reduce the power consumption of the lighting system 120, the lighting system controller 110 may control each of the plurality of luminaires 122 to temporarily decrease the light intensity level applied therein by a defined amount (e.g. by a certain percentage), whereas in response to a request to increase the power consumption of the lighting system 120, the lighting system controller 110 may control each of the plurality of luminaires 122 to temporarily increase the light intensity level applied therein by a defined amount (e.g. by a certain percentage). Along the lines of the previous example(s), the lighting system controller 110 may accomplish this via instructing the lighting controller 121 to adjust the respective light intensity levels of the plurality of luminaires 122 accordingly or the lighting system controller 110 transmitting (e.g. broadcasting) a message to the plurality of luminaires 122 instructing the luminaires 122-k to adjust their light intensity settings accordingly. This may be accomplished, for example, via decreasing or increasing the respective target light intensities *I_{tgt,k}* by the predefined amount, thereby resulting in a corresponding change in power consumption due to adjusted light intensity level when the luminaire 122-k is switched on or kept on e.g. due to operation of the respective lighting control rule(s).

In a further example, as a response to a request to reduce the power consumption of the lighting system 120, the lighting system controller 110 may temporarily disable or redefine the luminaire grouping applied in the lighting system 120. As an example in this regard, the grouping may be completely disabled, thereby switching on or keeping on the light output of those ones of the plurality of luminaires 122 for which the associated occupancy indications indicate occupancy, while switching off or keeping off those the light output of those ones of the plurality of luminaires 122 for which the associated occupancy indications indicate non-occupancy regardless of the grouping.

In a further example, as a response to a request to increase the power consumption of the lighting system 120, the lighting system controller 110 may control at least those ones of the plurality of luminaires 122 for which the associated occupancy indications indicate non-occupancy to switch on their light output and/or to increase the light intensity applied therein to the respective maximum allowable light intensity level.

In a further example, as a response to a request to reduce the power consumption of the lighting system 120, the lighting system controller 110 may control one or more luminaires 122-k for which the associated light level indications indicate light level that exceeds the predefined light level threshold described in the foregoing to reduce or turn off its light output regardless of the occupancy indicated therefor.

According to an example, the light system 120 may be controlled via usage of a predictive lighting control technique that aims at finding a suitable balance between user comfort and energy consumption in view of providing sufficient light output in the illuminated space in view of the occupancy therein while at the same time avoiding unnecessary consumption of energy. As an example, this may be accomplished via application of a user discomfort function that is descriptive of user discomfort arising from application of certain settings for switching and keeping on the light output of the luminaires 122-k and for switching off and/or dimming down the light output of the luminaires 122-k in view of an energy consumption function that is descriptive of the energy consumption arising from application of the certain settings, e.g. in a manner described in EP 3681251.

As an example of using such a predictive lighting control technique in the framework of the present disclosure, the lighting control entitie(s) of the lighting system 121 (e.g. the lighting controller 121 or the respective lighting control portions of the luminaires 122-k) may have two or more different settings available for selection therein, where the two or more settings may comprise e.g. the following options for controlling the tradeoff between the user comfort and the energy consumption, e.g.
- default settings that represent a preferred balance between the user comfort and the energy consumption,
- low-energy settings that provide reduced power consumption at the expense of reduced user comfort,
- comfort settings that provide increased user comfort at the expense of increased energy consumption.

In consideration of the method 200, (predicted) power consumption according to the default settings may correspond to the baseline power consumption of the lighting system 120, (predicted) power consumption according to the low-energy settings may correspond to the minimum allowable power consumption of the lighting system 120, and (predicted) power consumption according to the comfort settings may correspond to the maximum allowable power consumption of the lighting system 120. Consequently, the lighting system controller 110 may report, to the grid controller 130, the difference between the respective (predicted) power consumptions according to the default settings and the low-energy settings as the capacity for reducing the energy consumption of the lighting system 120 and/or it may report the difference between the respective (predicted) power consumptions according to the comfort settings and the defaults settings as the capacity for increasing the energy consumption of the lighting system 120. Hence, in case the grid controller 130 subsequently requests the lighting system controller 110 to one of reduce or increase the power consumption of the lighting system, the lighting system controller 110 may control the luminaires 122-k of the lighting system 120 e.g. to switch operating in accordance with the low-energy settings (instead of the default settings) or control the luminaires 122-k of the lighting system 120 e.g. to switch operating in accordance with the comfort settings (instead of the default settings). The above example that involves the default settings, the low-energy settings and the comfort settings readily generalizes into one where only two different settings (e.g. the default settings together with the low-energy settings or the default settings together with the comfort settings) are applied or into one where more than three different settings are applied, *mutatis mutandis.*

Figure 4 illustrates a block diagram of some components of an apparatus 300 that may be employed to implement at least some of the operations described with references to the lighting system controller 110. The apparatus 300 comprises a processor 310 and a memory 320. The memory 320 may store data and computer program code 325. The apparatus 300 may further comprise communication means 330 for wired or wireless communication with other apparatuses. The apparatus 300 may further comprise user I/O (input/output) components 340 that may be arranged, together with the processor 310 and a portion of the computer program code 325, to provide a user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the lighting system controller 110. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the lighting system controller 110 when loaded into the processor 310. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the lighting system controller 110. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the lighting system controller 110.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the lighting system controller 110. The computer-readable non-transitory medium may comprise a memory device or a record medium that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A lighting system controller (110) for a lighting management system (100) comprising the lighting system controller (110), a lighting system (120) and a grid controller (130), the lighting system controller (110) provided for controlling operation of the lighting system (120) that comprises a plurality of luminaires (122) for illuminating respective locations of a space and a plurality of occupancy sensors arranged in said space, wherein respective light output of each of the plurality of luminaires (122) is controlled at least in part in accordance with occupancy indications obtained from an occupancy sensor associated therewith, the lighting system controller (110) being arranged to:
estimate (202) a minimum allowable power consumption of the lighting system (120) and a maximum allowable power consumption of the lighting system (120) for a predefined time period;
estimate (204) a baseline power consumption of the lighting system (120) at the predefined time period, wherein the baseline power consumption comprises one of a current power consumption of the lighting system (120) or a predicted power consumption of the lighting system (120) for a future time period;
determine (206) respective capacities for reducing or increasing the power consumption of the lighting system (120) at the predefined time period based on the estimated baseline power consumption in dependence of the estimated minimum allowable power consumption and the estimated maximum allowable power consumption;
provide (208) information that defines the determined respective capacities for reducing or increasing the power consumption of the lighting system (120) at the predefined time period to the grid controller (130) arranged for facilitating a balance between electricity production to and electricity consumption from an electrical grid that serves to supply operating power to the lighting system (120); and
control (210), in response to a request from the grid controller (130) to one of reduce or increase the power consumption of the lighting system (120), one or more luminaires (122-k) of the plurality of luminaires (122) to one of reduce or increase their respective light outputs in accordance with said request
**characterized in that** the lighting system controller (110) is arranged to estimate the minimum allowable power consumption of the lighting system (120) based on respective predefined minimum allowable light intensity levels assigned to said plurality of luminaires (122) and estimate the maximum allowable power consumption of the lighting system (120) based on respective predefined maximum allowable light intensity levels assigned to said plurality of luminaires (122), wherein the minimum and maximum allowable power consumptions are estimated for the predefined time period in dependence of the occupancy indications obtained for said plurality of luminaires (122) from the respective one of said plurality of occupancy sensors associated with respective one of said plurality of luminaires (122).

2. A lighting system controller (110) according to claim 1, wherein the predefined time period comprises current time and wherein the lighting system controller (110) is arranged to
estimate, for each luminaire (122-k) of said plurality of luminaires (122), respective minimum allowable power consumption, respective maximum allowable power consumption and respective baseline power consumption for the predefined time period in view of occupancy indications associated with the respective luminaire (122-k);
determine, for each luminaire (122-k) of said plurality of luminaires (122), respective capacity for reducing power consumption at the predefined time instant based on a difference between the baseline power consumption of the respective luminaire (122-k) and the minimum allowable power consumption of the respective luminaire (122-k) estimated for the predefined time period and determine the capacity for reducing the power consumption of the lighting system (120) at the predefined time period as a combination of the respective capacities for reducing power consumption determined for the plurality of luminaires (122); and
determine, for each luminaire (122-k) of said plurality of luminaires (122), respective capacity for increasing power consumption at the predefined time period based on a difference between the maximum allowable power consumption of the respective luminaire (122-k) and the baseline power consumption of the respective luminaire (122-k) estimated for the predefined time period and determine the capacity for increasing the power consumption of the lighting system (120) at the predefined time instant as a combination of the respective capacities for increasing power consumption determined for the plurality of luminaires (122).

3. A lighting system controller (110) according to claim 2, arranged to:
obtain, for each luminaire (122-k) of said plurality of luminaires (122), a respective indication of light intensity level applied for the light output of the respective luminaire (122-k) at the predefined time period; and
estimate, for each luminaire (122-k) of said plurality of luminaires (122), the respective baseline power consumption for the predefined time period based on the light intensity level applied for the light output of the respective luminaire (122-k) at the predefined time period and a maximum power consumption of the respective luminaire (122-k).

4. A lighting system controller (110) according to claim 2 or 3, arranged to estimate the respective minimum allowable power consumption at the predefined time period for those luminaires (122-k) of said plurality of luminaires (122) for which the occupancy sensor associated therewith indicates occupancy for the predefined time period as follows:
obtain a minimum allowable light intensity defined for the respective luminaire (122-k) at the predefined time period; and
estimate the minimum allowable power consumption for the respective luminaire (122-k) at the predefined time period based on the minimum allowable light intensity defined for the respective luminaire (122-k) for the predefined time period and the maximum power consumption of the respective luminaire (122-k).

5. A lighting system controller (110) according to claim 4, arranged to set the respective minimum allowable power consumption at the predefined time period for those luminaires (122-k) of said plurality of luminaires (122) for which the occupancy sensor associated therewith indicates non-occupancy for the predefined time period to zero.

6. A lighting system controller (110) according to any of claims 2 to 5, arranged to estimate the respective maximum allowable power consumption at the predefined time period for those luminaires (122-k) of said plurality of luminaires (122) for which the occupancy sensor associated therewith indicates occupancy for the predefined time period as follows:
obtain a maximum allowable light intensity defined for the respective luminaire (122-k) at the predefined time period; and
estimate the maximum allowable power consumption for the respective luminaire (122-k) at the predefined time period based on the maximum allowable light intensity defined for the respective luminaire (122-k) for the predefined time period and the maximum power consumption of the respective luminaire (122-k).

7. A lighting system controller (110) according to claim 6, arranged to set the respective maximum allowable power consumption at the predefined time instant for those luminaires (122-k) of said plurality of luminaires (122) for which the occupancy sensor associated therewith indicates non-occupancy for the predefined time period to the maximum power consumption of the respective luminaire (122-k).

8. A lighting system controller (110) according to claim 1, wherein the predefined time period comprises a future time period and wherein the lighting system controller (110) is arranged to:
determine, based on past values of the minimum allowable power consumption of the lighting system (120) via usage of a respective predefined prediction model, a predicted minimum allowable power consumption of the lighting system (120) for the predefined time period;
determine, based on past values of the maximum allowable power consumption of the lighting system (120) via usage of a respective predefined prediction model, a predicted maximum allowable power consumption of the lighting system (120) for the predefined time period;
determine, based on past values of the baseline power consumption of the lighting system (120) via usage of a respective predefined prediction model, a predicted baseline power consumption of the lighting system (120) for the predefined time period;
determine respective predicted capacities for reducing or increasing the power consumption of the lighting system (120) during the predefined time period based on the predicted minimum allowable power consumption, the predicted maximum allowable power consumption and the predicted baseline power consumption, and
provide information that defines the determined respective predicted capacities for reducing or increasing the power consumption of the lighting system (120) at the predefined time instant to the grid controller (130).

9. A lighting system controller (110) according to any of claims 1 to 8, arranged to:
receive, form the grid controller (130), said request that defines one of reducing or increasing the power consumption of the lighting system (120); and
control one or more luminaires (122-k) of the plurality of luminaires (122) to one of reduce or increase their respective light outputs as a response to said request, so as to one of reduce or increase the power consumption of the lighting system (120) in accordance with said request.

10. A lighting system controller (110) according to claim 9, arranged to:
control, in response to a request to reduce the power consumption, one or more luminaires (122-k) of said plurality of luminaires (122) to provide the light output at a respective minimum allowable light intensity level when the occupancy sensor associated therewith indicates occupancy; and/or
control, in response to a request to increase the power consumption, one or more luminaires (122-k) of said plurality of luminaires (122) to provide the light output at a respective maximum allowable light intensity level when the occupancy sensor associated therewith indicates occupancy.

11. A lighting system controller (110) according to claim 9 or 10, arranged to control, in response to a request to increase the power consumption, one or more luminaires (122-k) of said plurality of luminaires (122) to provide light output at a respective maximum light intensity level when the occupancy sensor associated therewith indicates non-occupancy.

12. A lighting management system (100) comprising:
a lighting system (120) comprising a plurality of luminaires (122) for illuminating respective locations of a space and a plurality of occupancy sensors arranged in said space, wherein respective light output of each of the plurality of luminaires (122) is controlled at least in part in accordance with occupancy indications obtained from an occupancy sensor associated therewith; and
a lighting system controller (120) according to any of claims 1 to 11.

13. A method (200) in a lighting system controller (110) of a lighting management system (100) that comprises the lighting system controller (110), a lighting system (120) and a grid controller (130), the method (200) provided for controlling operation of the lighting system (120) that comprises a plurality of luminaires (122) for illuminating respective locations of a space and a plurality of occupancy sensors arranged in said space, wherein respective light output of each of the plurality of luminaires (122) is controlled at least in part in accordance with occupancy indications obtained from an occupancy sensor associated therewith, the method (200) comprising:
estimating (202) a minimum allowable power consumption of the lighting system (120) and a maximum allowable power consumption of the lighting system (120) for a predefined time period;
estimating (204) a baseline power consumption of the lighting system (120) at the predefined time period, wherein the baseline power consumption comprises one of a current power consumption of the lighting system (120) or a predicted power consumption of the lighting system (120) for a future time period;
determining (206) respective capacities for reducing or increasing the power consumption of the lighting system (120) at the predefined time period based on the estimated baseline power consumption in dependence of the estimated minimum allowable power consumption and the estimated maximum allowable power consumption;
providing (208) information that defines the determined respective capacities for reducing or increasing the power consumption of the lighting system (120) at the predefined time period to the grid controller (130) arranged for facilitating a balance between electricity production to and electricity consumption from an electrical grid that serves to supply operating power to the lighting system (120); and
controlling (210), in response to a request from the grid controller (130) to one of reduce or increase the power consumption of the lighting system (120), one or more luminaires (122-k) of the plurality of luminaires (122) to one of reduce or increase their respective light outputs in accordance with said request
**characterized in that** estimating (202) the minimum and maximum allowable power consumption comprises estimating the minimum allowable power consumption of the lighting system (120) based on respective predefined minimum allowable light intensity levels assigned to said plurality of luminaires (122) and estimating the maximum allowable power consumption of the lighting system (120) based on respective predefined maximum allowable light intensity levels assigned to said plurality of luminaires (122), wherein the minimum and maximum allowable power consumptions are estimated for the predefined time period in dependence of the occupancy indications obtained for said plurality of luminaires (122) from the respective one of said plurality of occupancy sensors associated with respective one of said plurality of luminaires (122).

14. A computer program comprising computer readable program code configured to cause performing of the method according to claim 13 when said program code is run on one or more computing apparatuses.

## Patentansprüche

1. Beleuchtungssystemsteuerung (110) für ein Beleuchtungsverwaltungssystem (100), das die Beleuchtungssystemsteuerung (110), ein Beleuchtungssystem (120) und eine Netzsteuerung (130) umfasst, wobei die Beleuchtungssystemsteuerung (110) zum Steuern des Betriebs des Beleuchtungssystems (120) bereitgestellt ist, das eine Vielzahl von Leuchten (122) zum Beleuchten jeweiliger Orte eines Raums und eine Vielzahl von Belegungssensoren umfasst, die in dem Raum angeordnet sind, wobei eine jeweilige Lichtausgabe jeder der Vielzahl von Leuchten (122) zumindest teilweise gemäß Belegungsangaben gesteuert wird, die von einem damit assoziierten Belegungssensor erhalten werden, wobei die Beleuchtungssystemsteuerung (110) für Folgendes ausgebildet ist:
Schätzen (202) eines minimal zulässigen Stromverbrauchs des Beleuchtungssystems (120) und eines maximal zulässigen Stromverbrauchs des Beleuchtungssystems (120) für einen vordefinierten Zeitraum;
Schätzen (204) eines Grundlaststromverbrauchs des Beleuchtungssystems (120) zu dem vordefinierten Zeitraum, wobei der Grundlaststromverbrauch einen aktuellen Stromverbrauch des Beleuchtungssystems (120) oder einen vorhergesagten Stromverbrauch des Beleuchtungssystems (120) für einen zukünftigen Zeitraum umfasst;
Bestimmen (206) jeweiliger Kapazitäten zum Reduzieren oder Erhöhen des Stromverbrauchs des Beleuchtungssystems (120) zu dem vordefinierten Zeitraum basierend auf dem geschätzten Grundlaststromverbrauch in Abhängigkeit von dem geschätzten minimal zulässigen Stromverbrauch und dem geschätzten maximal zulässigen Stromverbrauch;
Bereitstellen (208) von Informationen, die die bestimmten jeweiligen Kapazitäten zum Reduzieren oder Erhöhen des Stromverbrauchs des Beleuchtungssystems (120) zu dem vordefinierten Zeitraum definieren, an die Netzsteuerung (130), die dazu ausgelegt ist, ein Gleichgewicht zwischen der Stromerzeugung zu und dem Stromverbrauch von einem Stromnetz, das dazu dient, dem Beleuchtungssystem (120) Betriebsleistung zuzuführen, zu ermöglichen; und
Steuern (210), als Reaktion auf eine Anforderung von der Netzsteuerung (130) zum Reduzieren oder Erhöhen des Stromverbrauchs des Beleuchtungssystems (120), einer oder mehrerer Leuchten (122-k) der Vielzahl von Leuchten (122) zum Reduzieren oder Erhöhen ihrer jeweiligen Lichtausgaben gemäß der Anforderung,
**dadurch gekennzeichnet, dass** die Beleuchtungssystemsteuerung (110) ausgelegt ist zum Schätzen des minimal zulässigen Stromverbrauchs des Beleuchtungssystems (120) basierend auf jeweiligen vordefinierten minimal zulässigen Lichtstärkepegeln, die der Vielzahl von Leuchten (122) zugewiesen sind, und Schätzen des maximal zulässigen Stromverbrauchs des Beleuchtungssystems (120) basierend auf jeweiligen vordefinierten maximal zulässigen Lichtstärkepegeln, die der Vielzahl von Leuchten (122) zugewiesen sind, wobei der minimal und der maximal zulässige Stromverbrauch für den vordefinierten Zeitraum in Abhängigkeit von den Belegungsanzeigen geschätzt werden, die für die Vielzahl von Leuchten (122) von dem jeweiligen der Vielzahl von Belegungssensoren, die mit jeweiligen einer der Vielzahl von Leuchten (122) assoziiert sind, erhalten werden.

2. Beleuchtungssystemsteuerung (110) nach Anspruch 1, wobei der vordefinierte Zeitraum aktuelle Zeit umfasst und wobei die Beleuchtungssystemsteuerung (110) für Folgendes ausgebildet ist:
Schätzen, für jede Leuchte (122-k) der Vielzahl von Leuchten (122), eines jeweiligen minimal zulässigen Stromverbrauchs, eines jeweiligen maximal zulässigen Stromverbrauchs und eines jeweiligen Grundlaststromverbrauchs für den vordefinierten Zeitraum angesichts von Belegungsanzeigen, die mit der jeweiligen Leuchte (122-k) assoziiert sind;
Bestimmen, für jede Leuchte (122-k) der Vielzahl von Leuchten (122), eine jeweilige Kapazität zum Reduzieren des Stromverbrauchs zu dem vordefinierten Zeitpunkt basierend auf einer Differenz zwischen dem Grundlaststromverbrauch der jeweiligen Leuchte (122-k) und dem minimal zulässigen Stromverbrauch der jeweiligen Leuchte (122-k), der für den vordefinierten Zeitraum geschätzt wird, und Bestimmen der Kapazität zum Reduzieren des Stromverbrauchs des Beleuchtungssystems (120) zu dem vordefinierten Zeitraum als eine Kombination der jeweiligen Kapazitäten zum Reduzieren des Stromverbrauchs, der für die Vielzahl von Leuchten (122) bestimmt wird; und
Bestimmen, für jede Leuchte (122-k) der Vielzahl von Leuchten (122), die jeweilige Kapazität zum Erhöhen des Stromverbrauchs zu dem vordefinierten Zeitraum basierend auf einer Differenz zwischen dem maximal zulässigen Stromverbrauch der jeweiligen Leuchte (122-k) und dem Grundlaststromverbrauch der jeweiligen Leuchte (122-k), der für den vordefinierten Zeitraum geschätzt wird, und Bestimmen der Kapazität zum Erhöhen des Stromverbrauchs des Beleuchtungssystems (120) zu dem vordefinierten Zeitpunkt als eine Kombination der jeweiligen Kapazitäten zum Erhöhen des Stromverbrauchs, der für die Vielzahl von Leuchten (122) bestimmt wird.

3. Beleuchtungssystemsteuerung (110) nach Anspruch 2, die für Folgendes ausgebildet ist:
Erhalten, für jede Leuchte (122-k) der Vielzahl von Leuchten (122), einer jeweiligen Angabe eines Lichtstärkepegels, der für die Lichtausgabe der jeweiligen Leuchte (122-k) bei dem vordefinierten Zeitraum angelegt wird; und
Schätzen, für jede Leuchte (122-k) der Vielzahl von Leuchten (122), des jeweiligen Grundlaststromverbrauchs für den vordefinierten Zeitraum basierend auf dem Lichtstärkepegel, der für die Lichtausgabe der jeweiligen Leuchte (122-k) an dem vordefinierten Zeitraum angewendet wird, und einem maximalen Stromverbrauch der jeweiligen Leuchte (122-k).

4. Beleuchtungssystemsteuerung (110) nach Anspruch 2 oder 3, ausgelegt zum Schätzen des jeweiligen minimal zulässigen Stromverbrauchs zu dem vordefinierten Zeitraum für diejenigen Leuchten (122-k) der Vielzahl von Leuchten (122), für die der damit assoziierte Belegungssensor eine Belegung für den vordefinierten Zeitraum wie folgt angibt:
Erhalten einer minimal zulässigen Lichtintensität**,** die für die jeweilige Leuchte (122-k) zu dem vordefinierten Zeitraum definiert ist; und
Schätzen des minimal zulässigen Stromverbrauchs für die jeweilige Leuchte (122-k) zu dem vordefinierten Zeitraum basierend auf der minimal zulässigen Lichtintensität, die für die jeweilige Leuchte (122-k) für den vordefinierten Zeitraum definiert ist, und dem maximalen Stromverbrauch der jeweiligen Leuchte (122-k).

5. Beleuchtungssystemsteuerung (110) nach Anspruch 4, ausgelegt zum Einstellen des jeweiligen minimal zulässigen Stromverbrauchs zu dem vordefinierten Zeitraum für diejenigen Leuchten (122-k) der Vielzahl von Leuchten (122), für die der damit assoziierte Belegungssensor eine Nichtbelegung für den vordefinierten Zeitraum angibt, auf Null.

6. Beleuchtungssystemsteuerung (110) nach einem der Ansprüche 2 bis 5, ausgelegt zum Schätzen des jeweiligen maximal zulässigen Stromverbrauchs zu dem vordefinierten Zeitraum für diejenigen Leuchten (122-k) der Vielzahl von Leuchten (122), für die der damit assoziierte Belegungssensor eine Belegung für den vordefinierten Zeitraum wie folgt angibt:
Erhalten einer maximal zulässigen Lichtintensität, die für die jeweilige Leuchte (122-k) zu dem vordefinierten Zeitraum definiert ist; und
Schätzen des maximal zulässigen Stromverbrauchs für die jeweilige Leuchte (122-k) zu dem vordefinierten Zeitraum basierend auf der für die jeweilige Leuchte (122-k) für den vordefinierten Zeitraum definierten maximal zulässigen Lichtintensität und dem maximalen Stromverbrauch der jeweiligen Leuchte (122-k).

7. Beleuchtungssystemsteuerung (110) nach Anspruch 6, ausgelegt zum Einstellen des jeweiligen maximal zulässigen Stromverbrauchs zu dem vordefinierten Zeitpunkt für diejenigen Leuchten (122-k) der Vielzahl von Leuchten (122), für die der damit assoziierte Belegungssensor eine Nichtbelegung für den vordefinierten Zeitraum angibt, auf den maximalen Stromverbrauch der jeweiligen Leuchte (122-k).

8. Beleuchtungssystemsteuerung (110) nach Anspruch 1, wobei der vordefinierte Zeitraum einen zukünftigen Zeitraum umfasst, und wobei die Beleuchtungssystemsteuerung (110) für Folgendes ausgebildet ist:
Bestimmen, basierend auf vergangenen Werten des minimal zulässigen Stromverbrauchs des Beleuchtungssystems (120) durch Verwendung eines jeweiligen vordefinierten Vorhersagemodells, eines vorhergesagten minimal zulässigen Stromverbrauchs des Beleuchtungssystems (120) für den vordefinierten Zeitraum;
Bestimmen, basierend auf vergangenen Werten des maximal zulässigen Stromverbrauchs des Beleuchtungssystems (120) durch Verwendung eines jeweiligen vordefinierten Vorhersagemodells, eines vorhergesagten maximal zulässigen Stromverbrauchs des Beleuchtungssystems (120) für den vordefinierten Zeitraum;
Bestimmen, basierend auf vergangenen Werten des Grundlaststromverbrauchs des Beleuchtungssystems (120) über die Verwendung eines jeweiligen vordefinierten Vorhersagemodells, eines vorhergesagten Grundlaststromverbrauchs des Beleuchtungssystems (120) für den vordefinierten Zeitraum;
Bestimmen jeweiliger vorhergesagter Kapazitäten zum Reduzieren oder Erhöhen des Stromverbrauchs des Beleuchtungssystems (120) während des vordefinierten Zeitraums basierend auf dem vorhergesagten minimal zulässigen Stromverbrauch, dem vorhergesagten maximal zulässigen Stromverbrauch und dem vorhergesagten Grundlaststromverbrauch, und
Bereitstellen von Informationen, die die bestimmten jeweiligen vorhergesagten Kapazitäten zum Reduzieren oder Erhöhen des Stromverbrauchs des Beleuchtungssystems (120) zu dem vordefinierten Zeitpunkt definieren, an die Netzsteuerung (130).

9. Beleuchtungssystemsteuerung (110) nach einem der Ansprüche 1 bis 8, die für Folgendes ausgebildet ist**:**
Empfangen, Bilden der Netzsteuerung (130), der Anforderung, die eines von Reduzieren oder Erhöhen des Stromverbrauchs des Beleuchtungssystems (120) definiert; und
Steuern einer oder mehrerer Leuchten (122-k) der Vielzahl von Leuchten (122), um ihre jeweiligen Lichtausgaben als Reaktion auf die Anforderung zu reduzieren oder zu erhöhen, um den Stromverbrauch des Beleuchtungssystems (120) gemäß der Anforderung zu reduzieren oder zu erhöhen.

10. Beleuchtungssystemsteuerung (110) nach Anspruch 9, die für Folgendes ausgebildet ist:
Steuern, als Reaktion auf eine Anforderung zum Reduzieren des Stromverbrauchs, einer oder mehrerer Leuchten (122-k) der Vielzahl von Leuchten (122), um die Lichtausgabe mit einem jeweiligen minimal zulässigen Lichtstärkepegel bereitzustellen, wenn der damit assoziierte Belegungssensor eine Belegung angibt; und/oder
Steuern, als Reaktion auf eine Anforderung zum Erhöhen des Stromverbrauchs, einer oder mehrerer Leuchten (122-k) der Vielzahl von Leuchten (122), um die Lichtausgabe mit einem jeweiligen maximal zulässigen Lichtstärkepegel bereitzustellen, wenn der damit assoziierte Belegungssensor eine Belegung angibt.

11. Beleuchtungssystemsteuerung (110) nach Anspruch 9 oder 10, die dazu ausgelegt ist, als Reaktion auf eine Anforderung zum Erhöhen des Stromverbrauchs eine oder mehrere Leuchten (122-k) der Vielzahl von Leuchten (122) zu steuern, um eine Lichtausgabe mit einem jeweiligen maximalen Lichtstärkepegel bereitzustellen, wenn der damit assoziierte Belegungssensor eine Nichtbelegung angibt.

12. Beleuchtungsverwaltungssystem (100), das Folgendes umfasst:
ein Beleuchtungssystem (120), das eine Vielzahl von Leuchten (122) zum Beleuchten jeweiliger Orte eines Raums und eine Vielzahl von in dem Raum angeordneten Belegungssensoren umfasst, wobei die jeweilige Lichtausgabe jeder der Vielzahl von Leuchten (122) zumindest teilweise gemäß den Belegungsangaben gesteuert wird, die von einem damit assoziierten Belegungssensor erhalten werden; und
Beleuchtungssystemsteuerung (120) nach einem der Ansprüche 1 bis 11.

13. Verfahren (200) in einer Beleuchtungssystemsteuerung (110) eines Beleuchtungsverwaltungssystems (100), das die Beleuchtungssystemsteuerung (110), ein Beleuchtungssystem (120) und eine Netzsteuerung (130) umfasst, wobei das Verfahren (200) zum Steuern des Betriebs des Beleuchtungssystems (120) bereitgestellt ist, das eine Vielzahl von Leuchten (122) zum Beleuchten jeweiliger Orte eines Raums und eine Vielzahl von Belegungssensoren umfasst, die in dem Raum angeordnet sind, wobei eine jeweilige Lichtausgabe jeder der Vielzahl von Leuchten (122) zumindest teilweise gemäß den Belegungsangaben gesteuert wird, die von einem damit assoziierten Belegungssensor erhalten werden, wobei das Verfahren (200) Folgendes umfasst:
Schätzen (202) eines minimal zulässigen Stromverbrauchs des Beleuchtungssystems (120) und eines maximal zulässigen Stromverbrauchs des Beleuchtungssystems (120) für einen vordefinierten Zeitraum;
Schätzen (204) eines Grundlaststromverbrauchs des Beleuchtungssystems (120) zu dem vordefinierten Zeitraum, wobei der Grundlaststromverbrauch einen aktuellen Stromverbrauch des Beleuchtungssystems (120) oder einen vorhergesagten Stromverbrauch des Beleuchtungssystems (120) für einen zukünftigen Zeitraum umfasst;
Bestimmen (206) jeweiliger Kapazitäten zum Reduzieren oder Erhöhen des Stromverbrauchs des Beleuchtungssystems (120) zu dem vordefinierten Zeitraum basierend auf dem geschätzten Grundlaststromverbrauch in Abhängigkeit von dem geschätzten minimal zulässigen Stromverbrauch und dem geschätzten maximal zulässigen Stromverbrauch;
Bereitstellen (208) von Informationen, die die bestimmten jeweiligen Kapazitäten zum Reduzieren oder Erhöhen des Stromverbrauchs des Beleuchtungssystems (120) zu dem vordefinierten Zeitraum definieren, an die Netzsteuerung (130), die dazu ausgelegt ist, ein Gleichgewicht zwischen der Stromerzeugung zu und dem Stromverbrauch von einem Stromnetz, das dazu dient, dem Beleuchtungssystem (120) Betriebsleistung zuzuführen, zu ermöglichen; und
Steuern (210), als Reaktion auf eine Anforderung von der Netzsteuerung (130), um den Stromverbrauch des Beleuchtungssystems (120) zu reduzieren oder zu erhöhen, einer oder mehrerer Leuchten (122-k) der Vielzahl von Leuchten (122), um ihre jeweiligen Lichtausgaben gemäß der Anforderung zu reduzieren oder zu erhöhen
**dadurch gekennzeichnet, dass** das Schätzen (202) des minimal und des maximal zulässigen Stromverbrauchs Schätzen des minimal zulässigen Stromverbrauchs des Beleuchtungssystems (120) basierend auf jeweiligen vordefinierten minimal zulässigen Lichtstärkepegeln, die der Vielzahl von Leuchten (122) zugewiesen sind, und Schätzen des maximal zulässigen Stromverbrauchs des Beleuchtungssystems (120) basierend auf jeweiligen vordefinierten maximal zulässigen Lichtstärkepegeln, die der Vielzahl von Leuchten (122) zugewiesen sind, umfasst, wobei der minimal und der maximal zulässige Stromverbrauch für den vordefinierten Zeitraum in Abhängigkeit von den Belegungsanzeigen geschätzt werden, die für die Vielzahl von Leuchten (122) von dem jeweiligen der Vielzahl von Belegungssensoren, die mit einer jeweiligen der Vielzahl von Leuchten (122) assoziiert sind, erhalten werden.

14. Computerprogramm, das computerlesbaren Programmcode umfasst, der dazu ausgelegt ist, das Durchführen des Verfahrens nach Anspruch 13 zu bewirken, wenn der Programmcode auf einer oder mehreren Rechenvorrichtungen ausgeführt wird.

## Revendications

1. Commande (110) de système d'éclairage destinée à un système (100) de gestion d'éclairage comportant la commande (110) de système d'éclairage, un système (120) d'éclairage et une commande (130) de réseau, la commande (110) de système d'éclairage étant prévue pour commander le fonctionnement du système (120) d'éclairage qui comporte une pluralité de luminaires (122) servant à éclairer des emplacements respectifs d'un espace et une pluralité de capteurs d'occupation disposés dans ledit espace, une production respective de lumière de chacun de la pluralité de luminaires (122) étant commandée au moins en partie selon des indications d'occupation obtenues à partir d'un capteur d'occupation associé à celui-ci, la commande (110) de système d'éclairage étant disposée pour :
estimer (202) une consommation d'énergie minimum admissible du système (120) d'éclairage et une consommation d'énergie maximum admissible du système (120) d'éclairage pour une période prédéfinie ;
estimer (204) une consommation d'énergie de référence du système (120) d'éclairage au cours de la période prédéfinie, la consommation d'énergie de référence comportant soit une consommation d'énergie actuelle du système (120) d'éclairage, soit une consommation d'énergie prédite du système (120) d'éclairage pour une période future ;
déterminer (206) des capacités respectives de réduction ou d'augmentation de la consommation d'énergie du système (120) d'éclairage au cours de la période prédéfinie d'après la consommation d'énergie de référence estimée en fonction de la consommation d'énergie minimum admissible estimée et de la consommation d'énergie maximum admissible estimée ;
fournir (208) des informations qui définissent les capacités respectives déterminées de réduction ou d'augmentation de la consommation d'énergie du système (120) d'éclairage au cours de la période prédéfinie à la commande (130) de réseau disposée pour faciliter un équilibre entre la production d'électricité à destination et la consommation d'électricité en provenance d'un réseau électrique qui sert à fournir une alimentation de fonctionnement au système (120) d'éclairage ; et
commander (210), en réponse à une demande provenant de la commande (130) de réseau, visant soit à réduire soit à augmenter la consommation d'énergie du système (120) d'éclairage, un ou plusieurs luminaires (122-k) de la pluralité de luminaires (122) soit pour réduire soit pour augmenter leurs productions respectives de lumière conformément à ladite demande
**caractérisé en ce que** la commande (110) de système d'éclairage est disposée pour estimer la consommation d'énergie minimum admissible du système (120) d'éclairage d'après des niveaux minimum admissibles d'intensité lumineuse respectifs prédéfinis affectés à ladite pluralité de luminaires (122) et estimer la consommation d'énergie maximum admissible du système (120) d'éclairage d'après des niveaux maximum admissibles d'intensité lumineuse respectifs prédéfinis affectés à ladite pluralité de luminaires (122), les consommations d'énergie minimum et maximum admissibles étant estimées pour la période prédéfinie en fonction des indications d'occupation obtenues pour ladite pluralité de luminaires (122) à partir du capteur considéré parmi ladite pluralité de capteurs d'occupation associé au luminaire considéré parmi ladite pluralité de luminaires (122).

2. Commande (110) de système d'éclairage selon la revendication 1, la période prédéfinie comportant l'instant présent et la commande (110) de système d'éclairage étant disposée pour
estimer, pour chaque luminaire (122-k) de ladite pluralité de luminaires (122), une consommation d'énergie minimum admissible respective, une consommation d'énergie maximum admissible respective et une consommation d'énergie de référence respective pour la période prédéfinie compte tenu d'indications d'occupation associées au luminaire (122-k) considéré ;
déterminer, pour chaque luminaire (122-k) de ladite pluralité de luminaires (122), une capacité respective de réduction de la consommation d'énergie à l'instant prédéfini d'après une différence entre la consommation d'énergie de référence du luminaire (122-k) considéré et la consommation d'énergie minimum admissible du luminaire (122-k) considéré estimée pour la période prédéfinie et déterminer la capacité de réduction de la consommation d'énergie du système (120) d'éclairage au cours de la période prédéfinie comme une combinaison des capacités respectives de réduction de la consommation d'énergie déterminées pour la pluralité de luminaires (122) ; et
déterminer, pour chaque luminaire (122-k) de ladite pluralité de luminaires (122), une capacité respective d'augmentation de la consommation d'énergie au cours de la période prédéfinie d'après une différence entre la consommation d'énergie maximum admissible du luminaire (122-k) considéré et la consommation d'énergie de référence du luminaire (122-k) considéré estimée pour la période prédéfinie et déterminer la capacité d'augmentation de la consommation d'énergie du système (120) d'éclairage à l'instant prédéfini comme une combinaison des capacités respectives d'augmentation de la consommation d'énergie déterminées pour la pluralité de luminaires (122).

3. Commande (110) de système d'éclairage selon la revendication 2, disposée pour :
obtenir, pour chaque luminaire (122-k) de ladite pluralité de luminaires (122), une indication respective de niveau d'intensité lumineuse appliqué pour la production de lumière du luminaire (122-k) considéré au cours de la période prédéfinie ; et
estimer, pour chaque luminaire (122-k) de ladite pluralité de luminaires (122), la consommation d'énergie de référence respective pour la période prédéfinie d'après le niveau d'intensité lumineuse appliqué pour la production de lumière du luminaire (122-k) considéré au cours de la période prédéfinie et une consommation d'énergie maximum du luminaire (122-k) considéré.

4. Commande (110) de système d'éclairage selon la revendication 2 ou 3, disposée pour estimer la consommation d'énergie minimum admissible respective au cours de la période prédéfinie pour ceux des luminaires (122-k) de ladite pluralité de luminaires (122) pour lesquels le capteur d'occupation associé à ceux-ci indique une occupation pour la période prédéfinie comme suit :
obtenir une intensité lumineuse minimum admissible définie pour le luminaire (122-k) considéré au cours de la période prédéfinie ; et
estimer la consommation d'énergie minimum admissible pour le luminaire (122-k) considéré au cours de la période prédéfinie d'après l'intensité lumineuse minimum admissible définie pour le luminaire (122-k) considéré pour la période prédéfinie et la consommation d'énergie maximum du luminaire (122-k) considéré.

5. Commande (110) de système d'éclairage selon la revendication 4, disposée pour régler à zéro la consommation d'énergie minimum admissible respective au cours de la période prédéfinie pour ceux des luminaires (122-k) de ladite pluralité de luminaires (122) pour lesquels le capteur d'occupation associé à ceux-ci indique une absence d'occupation pour la période prédéfinie.

6. Commande (110) de système d'éclairage selon l'une quelconque des revendications 2 à 5, disposée pour estimer la consommation d'énergie maximum admissible respective au cours de la période prédéfinie pour ceux des luminaires (122-k) de ladite pluralité de luminaires (122) pour lesquels le capteur d'occupation associé à ceux-ci indique une occupation pour la période prédéfinie comme suit :
obtenir une intensité lumineuse maximum admissible définie pour le luminaire (122-k) considéré au cours de la période prédéfinie ; et
estimer la consommation d'énergie maximum admissible pour le luminaire (122-k) considéré au cours de la période prédéfinie d'après l'intensité lumineuse maximum admissible définie pour le luminaire (122-k) considéré pour la période prédéfinie et la consommation d'énergie maximum du luminaire (122-k) considéré.

7. Commande (110) de système d'éclairage selon la revendication 6, disposée pour régler la consommation d'énergie maximum admissible respective à l'instant prédéfini, pour ceux des luminaires (122-k) de ladite pluralité de luminaires (122) pour lesquels le capteur d'occupation associé à ceux-ci indique une absence d'occupation pour la période prédéfinie, à la consommation d'énergie maximum du luminaire (122-k) considéré.

8. Commande (110) de système d'éclairage selon la revendication 1, la période prédéfinie comportant une période future et la commande (110) de système d'éclairage étant disposée pour :
déterminer, d'après des valeurs passées de la consommation d'énergie minimum admissible du système (120) d'éclairage par l'utilisation d'un modèle respectif prédéfini de prédiction, une consommation d'énergie minimum admissible prédite du système (120) d'éclairage pour la période prédéfinie ;
déterminer, d'après des valeurs passées de la consommation d'énergie maximum admissible du système (120) d'éclairage par l'utilisation d'un modèle respectif prédéfini de prédiction, une consommation d'énergie maximum admissible prédite du système (120) d'éclairage pour la période prédéfinie ;
déterminer, d'après des valeurs passées de la consommation d'énergie de référence du système (120) d'éclairage par l'utilisation d'un modèle respectif prédéfini de prédiction, une consommation d'énergie de référence prédite du système (120) d'éclairage pour la période prédéfinie ;
déterminer des capacités prédites respectives de réduction ou d'augmentation de la consommation d'énergie du système (120) d'éclairage pendant la période prédéfinie d'après la consommation d'énergie minimum admissible prédite, la consommation d'énergie maximum admissible prédite et la consommation d'énergie de référence prédite, et
fournir à la commande (130) de réseau des informations qui définissent les capacités prédites respectives déterminées de réduction ou d'augmentation de la consommation d'énergie du système (120) d'éclairage à l'instant prédéfini.

9. Commande (110) de système d'éclairage selon l'une quelconque des revendications 1 à 8, disposée pour :
recevoir, en provenance de la commande (130) de réseau, ladite demande qui définit soit la réduction soit l'augmentation de la consommation d'énergie du système (120) d'éclairage ; et
commander un ou plusieurs luminaires (122-k) de la pluralité de luminaires (122) soit pour réduire soit pour augmenter leurs productions respectives de lumière en réponse à ladite demande, de façon soit à réduire soit à augmenter la consommation d'énergie du système (120) d'éclairage conformément à ladite demande.

10. Commande (110) de système d'éclairage selon la revendication 9, disposée pour :
commander, en réponse à une demande de réduction de la consommation d'énergie, un ou plusieurs luminaires (122-k) de ladite pluralité de luminaires (122) pour fournir la production de lumière à un niveau minimum admissible respectif d'intensité lumineuse lorsque le capteur d'occupation associé à ceux-ci indique une occupation ; et/ou
commander, en réponse à une demande d'augmentation de la consommation d'énergie, un ou plusieurs luminaires (122-k) de ladite pluralité de luminaires (122) pour fournir la production de lumière à un niveau maximum admissible respectif d'intensité lumineuse lorsque le capteur d'occupation associé à ceux-ci indique une occupation.

11. Commande (110) de système d'éclairage selon la revendication 9 ou 10, disposée pour commander, en réponse à une demande d'augmentation de la consommation d'énergie, un ou plusieurs luminaires (122-k) de ladite pluralité de luminaires (122) pour fournir une production de lumière à un niveau maximum respectif d'intensité lumineuse lorsque le capteur d'occupation associé à ceux-ci indique une absence d'occupation.

12. Système (100) de gestion d'éclairage comportant :
un système (120) d'éclairage comportant une pluralité de luminaires (122) servant à éclairer des emplacements respectifs d'un espace et une pluralité de capteurs d'occupation disposé dans ledit espace, une production respective de lumière de chacun de la pluralité de luminaires (122) étant commandée au moins en partie selon des indications d'occupation obtenues à partir d'un capteur d'occupation associé à celui-ci ; et
une commande de système d'éclairage (120) selon l'une quelconque des revendications 1 à 11.

13. Procédé (200) dans une commande (110) de système d'éclairage d'un système (100) de gestion d'éclairage qui comporte la commande (110) de système d'éclairage, un système (120) d'éclairage et une commande (130) de réseau, le procédé (200) étant prévu pour commander le fonctionnement du système (120) d'éclairage qui comporte une pluralité de luminaires (122) servant à éclairer des emplacements respectifs d'un espace et une pluralité de capteurs d'occupation disposé dans ledit espace, une production respective de lumière de chacun de la pluralité de luminaires (122) étant commandée au moins en partie selon des indications d'occupation obtenues à partir d'un capteur d'occupation associé à celui-ci, le procédé (200) comportant :
l'estimation (202) d'une consommation d'énergie minimum admissible du système (120) d'éclairage et d'une consommation d'énergie maximum admissible du système (120) d'éclairage pour une période prédéfinie ;
l'estimation (204) d'une consommation d'énergie de référence du système (120) d'éclairage au cours de la période prédéfinie, la consommation d'énergie de référence comportant soit une consommation d'énergie actuelle du système (120) d'éclairage, soit une consommation d'énergie prédite du système (120) d'éclairage pour une période future ;
la détermination (206) des capacités respectives de réduction ou d'augmentation de la consommation d'énergie du système (120) d'éclairage au cours de la période prédéfinie d'après la consommation d'énergie de référence estimée en fonction de la consommation d'énergie minimum admissible estimée et de la consommation d'énergie maximum admissible estimée ;
la fourniture (208) d'informations qui définissent les capacités respectives déterminées de réduction ou d'augmentation de la consommation d'énergie du système (120) d'éclairage au cours de la période prédéfinie à la commande (130) de réseau disposée pour faciliter un équilibre entre la production d'électricité à destination et la consommation d'électricité en provenance d'un réseau électrique qui sert à fournir une alimentation de fonctionnement au système (120) d'éclairage ; et
la commande (210), en réponse à une demande provenant de la commande (130) de réseau, visant soit à réduire soit à augmenter la consommation d'énergie du système (120) d'éclairage, d'un ou de plusieurs luminaires (122-k) de la pluralité de luminaires (122) soit pour réduire soit pour augmenter leurs productions respectives de lumière conformément à ladite demande
**caractérisé en ce que** l'estimation (202) de la consommation d'énergie minimum et maximum admissible comporte l'estimation de la consommation d'énergie minimum admissible du système (120) d'éclairage d'après des niveaux minimum admissibles d'intensité lumineuse respectifs prédéfinis affectés à ladite pluralité de luminaires (122) et l'estimation de la consommation d'énergie maximum admissible du système (120) d'éclairage d'après des niveaux maximum admissibles d'intensité lumineuse respectifs prédéfinis affectés à ladite pluralité de luminaires (122), les consommations d'énergie minimum et maximum admissibles étant estimées pour la période prédéfinie en fonction des indications d'occupation obtenues pour ladite pluralité de luminaires (122) à partir du capteur considéré parmi ladite pluralité de capteurs d'occupation associé au luminaire considéré parmi ladite pluralité de luminaires (122).

14. Programme informatique comportant du code de programme lisible par ordinateur configuré pour provoquer la réalisation du procédé selon la revendication 13 lorsque ledit code de programme est exécuté sur un ou plusieurs appareils informatiques.
